Europäisches Patentamt

European Patent Office

Office européen des brevets

(11) Veröffentlichungsnummer: **0 053 215**
**B1**

(12) **EUROPÄISCHE PATENTSCHRIFT**

(45) Veröffentlichungstag der Patentschrift:
**06.06.84**

(21) Anmeldenummer: **80710028.4**

(22) Anmeldetag: **29.11.80**

(51) Int. Cl.³: **F 16 P 3/24,** F 16 D 15/00,
E 01 C 19/26, F 16 H 19/00

(54) **Stellvorrichtung.**

(43) Veröffentlichungstag der Anmeldung:
**09.06.82 Patentblatt 82/23**

(45) Bekanntmachung des Hinweises auf die Patenterteilung:
**06.06.84 Patentblatt 84/23**

(84) Benannte Vertragsstaaten:
**CH DE FR GB LI**

(56) Entgegenhaltungen:
**DE - B - 1 121 425**
**FR - A - 2 355 122**
**FR - A - 2 428 784**
**US - A - 1 647 932**
**US - A - 3 279 571**

(73) Patentinhaber: **LOSENHAUSEN Maschinenbau AG,**
**Schlüterstrasse 13-19, D-4000 Düsseldorf (DE)**

(72) Erfinder: **Strassmann, Rüdiger, Uedesheimer Strasse 3,**
**D-4047 Dormagen 5 (DE)**

## Beschreibung

Die Erfindung betrifft eine Stellvorrichtung enthaltend einen stufenlos verstellbaren Stellteil, ein Übertragungsglied zur Übertragung einer Stellbewegung, das von dem stufenlos verstellbaren Stellteil verstellbar ist, eine auf das Übertragungsglied wirkende Rückstelleinrichtung, welche das Übertragungsglied in eine vorgegebene Stellung zurückzustellen trachtet, wobei die Verstellung des Übertragungsgliedes aus dieser Stellung gegen die Wirkung der Rückstelleinrichtung erfolgt, eine zwischen dem stufenlos verstellbaren Stellteil und dem Übertragungsglied vorgesehene, durch Bewegung eines Kupplungsschaltglieds ausrückbare und nur bei einer vorgegebenen relativen Lage zwischen Stellteil und Übertragungsglied wiedereinrückbare Kupplung und einen schaltenden Stellteil, der mit dem Kupplungsschaltglied zum Ein- und Ausrücken der Kupplung gekoppelt ist.

Eine solche Stellvorrichtung ist beispielsweise anwendbar für einen mit Sicherheitsabschaltung versehenen Fahrantrieb bei Baumaschinen.

Bei einer an einem Führungshandgriff handgeführten, mit einem Fahrantrieb versehenen Baumaschine, z. B. einer Straßen- oder Vibrationswalze, müssen Vorkehrungen getroffen werden, um den Fahrantrieb selbsttätig abzuschalten, wenn der Maschinenführer den Führungshandgriff losläßt. Dadurch wird sichergestellt, daß die Baumaschine nicht unkontrolliert fahren und beispielsweise einen gestürzten Maschinenführer überrollen kann.

Bei einer bekannten Stellvorrichtung (FR-A-2 428 784) ist an einer Führungsdeichsel ein stufenlos verstellbarer Stellteil in Form eines schwenkbaren Stellhebels angebracht, durch den der Fahrantrieb der Vibrationswalze über ein damit verbundenes »Übertragungsglied« stufenlos verstellbar ist. An dem Stellhebel greifen Rückstellmittel an, welche den Stellhebel ständig in die Nullage, d. h. die der Fahrgeschwindigkeit null entsprechende Stellung, zurückzustellen trachten. An dem Stellhebel ist eine mit Zacken versehene Scheibe angebracht. Eine an der Führungsdeichsel angelenkte Klinke kann in die Zacken der Scheibe eingreifen und den Stellhebel in einer anderen als der Nullage verriegeln. Eine Feder sucht die Klinke außer Eingriff mit den Zacken zu drücken. Ein an dem Führungshandgriff sitzender Schwenkhebel, der vom Maschinenführer beim Anfassen des Führungshandgriffs mitumfaßt und gegen den Führungshandgriff gezogen wird, ist als »schaltender Stellteil« mit der Klinke über einen Zug oder Lenker verbunden, so daß der Schwenkhebel beim Anfassen des Führungshandgriffs die Klinke gegen die Wirkung der Feder in Eingriff mit den Zacken und den Stellhebel in seiner einmal eingestellten Lage verriegelt. Diese bekannte Anordnung hat verschiedene Nachteile:

Wenn der Führungshandgriff festgehalten ist und die Klinke in die Zähne eingreift, wird zwar der Stellhebel für den Fahrantrieb in seiner Stellung gehalten. Es ist aber nicht möglich, den Stellhebel bei festgehaltenem Führungshandgriff zu verstellen. Um die Fahrgeschwindigkeit zu verändern, muß der Führungshandgriff losgelassen und damit der Schwenkhebel freigegeben werden, so daß die Klinke außer Eingriff mit den Zähnen kommt. Dann kann der Stellhebel verschwenkt werden, der dann durch neues Anziehen des Schwenkhebels in der neuen Stellung arretiert wird. Das ist umständlich und beeinträchtigt die Steuerbarkeit der Baumaschine.

Es ist weiterhin möglich, auch bei losgelassenem Führungshandgriff über den Stellhebel das Übertragungsglied aus der Nullage zu bewegen und damit die Baumaschine in Bewegung zu setzen.

Eine andere Sicherheitsvorrichtung enthält einen stufenlos verstellbaren Stellteil in Form eines an einer Führungsdeichsel schwenkbar gelagerten Stellhebels und ein Übertragungsglied zur Übertragung einer Stellbewegung, das von dem stufenlos verstellbaren Stellteil verstellbar ist. Das Übertragungsglied ist ein Lenker, über den eine Stellbewegung auf die Hubeinstellung einer Hydraulikpumpe übertragen wird. Die Übertragung der Stellbewegung von dem stufenlos verstellbaren Stellteil, d. h. dem Stellhebel an der Führungsdeichsel, auf dieses Übertragungsglied erfolgt bei der Stellvorrichtung über einen Bowdenzug, einen schwenkbaren Winkelhebel und einen Lenker, der an einem Arm eines doppelarmigen Hebels angelenkt ist. An dem anderen Arm dieses doppelarmigen Hebels ist der das »Übertragungsglied« bildende Lenker angelenkt. Zwischen dem stufenlos verstellbaren Stellteil und dem Übertragungsglied ist eine Kupplung vorgesehen. Diese Kupplung ist durch die Bewegung eines Kupplungsschaltglieds ausrückbar und nur bei einer vorgegebenen relativen Lage zwischen Schaltteil und Übertragungsglied wiedereinrückbar. Diese Kupplung besteht bei der Stellvorrichtung aus einer Platte, auf welcher der doppelarmige Hebel gelagert ist und die ihrerseits um eine im Abstand von der Schwenkachse liegende Achse verschwenkbar gelagert ist. Die Platte weist eine Ausnehmung auf, in die eine das Kupplungsschaltglied bildende Klinke eingreift. Das Kupplungsschaltglied ist durch einen schaltend betätigbaren Schaltteil in Form eines am Führungshandgriff angebrachten Griffbügels über einen Bowdenzug und eine Feder bewegbar.

Auf das Übertragungsglied und die Hubeinstellung der Hydraulikpumpe wirkt eine Rückstelleinrichtung, welche das Übertragungsglied in eine vorgegebene Stellung, nämlich die Nullhubstellung der Hydraulikpumpe, zurückzustellen trachtet. Die Verstellung des Übertragungsglieds erfolgt gegen die Wirkung der Rückstelleinrichtung.

Bei Loslassen des Griffbügels durch den Maschinenführer wird die das Kupplungsschaltglied bildende Klinke aus der Ausnehmung herausgeschwenkt. Dadurch wird die Platte freigegeben und ist mit der Schwenkachse des doppelarmigen Hebels verschwenkbar. Das Übertragungsglied geht unter dem Einfluß der Rückstelleinrichtung in die Nullstellung, unabhängig von der Stellung des stufenlos verstellbaren Stellglieds, d. h. des Stellhebels an der Führungsdeichsel. Auch wenn der Griffbügel von dem Maschinenführer wieder ergriffen wird, führt dies noch nicht zu einem Wiedereinrücken der Kupplung oder zum Einschalten des Fahrantriebs, da das Übertragungsglied in der Nullhubstellung ist und die Ausnehmung der Platte gegenüber der Nase der Klinke verschwenkt ist. Die Klinke kommt daher neben der Ausnehmung am Rand der Platte zur Anlage, und der übrige Hub des Bowdenzugs wird von der Feder aufgenommen. Erst wenn der stufenlos verstellbare Stellteil in die der Nullhubstellung entsprechende Lage gebracht wird, steht die Ausnehmung wieder der Nase der Klinke gegenüber, so daß diese unter dem Einfluß der vorgespannten Feder einfallen und die Kupplung wiedereinrücken kann. Eine Bewegung des Stellteils bewirkt jetzt über das Übertragungsglied eine Verstellung der Hydraulikpumpe aus ihrer Nullhubstellung.

Diese Anordnung ist recht kompliziert und daher aufwendig. Sie benötigt unerwünscht viel Raum.

Der Erfindung liegt die Aufgabe zugrunde, eine Stellvorrichtung der eingangs definierten Art einfach und raumsparend auszubilden.

Erfindungsgemäß wird diese Aufgabe dadurch gelöst, daß

(a)  die Kupplung einen Hohlzylinder mit einer Querbohrung als erste Kupplungshälfte aufweist,

(b)  die zweite Kupplung mit einer zylindrischen Lagerfläche, die an eine dazu komplementär zylindrische Fläche des Hohlzylinders angrenzt, gegenüber diesem um eine gemeinsame Zylinderachse drehbeweglich gelagert ist und auf der Lagerfläche eine Vertiefung aufweist,

(c)  in der Querbohrung ein Wälzlager radial beweglich gehalten ist und

(d)  das Kupplungsschaltglied eine zylindrische Fläche aufweist, welche an die der zweiten Kupplungshälfte abgewandte zylindrische Fläche des Hohlzylinders angrenzt, und so axial beweglich ist, daß der Wälzkörper in einer ersten Stellung des Kupplungsschaltglieds durch dieses in der Vertiefung eingerastet gehalten wird und in der zweiten Stellung aus dieser Vertiefung ausweichen kann.

Es sind hier keine sperrigen und komplizierten Hebelgetriebe erforderlich. Die Kupplung bildet einen kompakten, in sich geschlossenen Bauteil.

Weitere Ausgestaltungen der Erfindung sind Gegenstand der Unteransprüche.

Ein Ausführungsbeispiel der Erfindung ist nachstehend unter Bezugnahme auf die Zeichnungen näher erläutert.

Sig. 1 zeigt einen Vertikalschnitt durch eine Stellvorrichtung mit eingerückter Kupplung.

Fig. 2 zeigt einen Schnitt längs der Linie A-B von Fig. 1.

Fig. 3 zeigt einen Vertikalschnitt durch die Stellvorrichtung mit ausgerückter Kupplung.

Fig. 4 zeigt einen Schnitt längs der Linie A-B von Fig. 3.

Die Stellvorrichtung enthält einen stufenlos verstellbaren Stellteil 10 in Form eines verschwenkbaren Stellhebels. Ein Übertragungsglied 12 ist von einem Zahnrad gebildet. Das Übertragungsglied 12 ist von dem stufenlos verstellbaren Stellteil 10 verstellbar. Zwischen dem stufenlos verstellbaren Stellteil 10 und dem Übertragungsglied 12 ist eine Kupplung 14 vorgesehen. Die Kupplung 14 ist, wie noch erläutert werden wird, durch die Bewegung eines Kupplungsschaltglieds 16 ausrückbar und nur bei einer vorgegebenen relativen Lage zwischen dem Stellteil 10 und dem Übertragungsglied 12 wiedereinrückbar. Mit dem Kupplungsschaltglied 16 ist ein schaltender Stellteil 18 in Form eines um eine Achse 20 verschwenkbaren Griffbügels gekoppelt. Auf das Übertragungsglied 12 wirkt eine Rückstelleinrichtung 22 in Form einer mit dem Zahnrad in Eingriff stehenden Zahnleiste 24, die durch Federn 26, 28 in eine vorgegebene Stellung, nämlich eine Mittellage gedrückt wird und so das Übertragungsglied 12, das Zahnrad, in eine vorgegebene Stellung zurückzustellen trachtet. Die Verstellung des Übertragungsglieds 12 aus dieser Stellung erfolgt gegen die Wirkung dieser Rückstelleinrichtung.

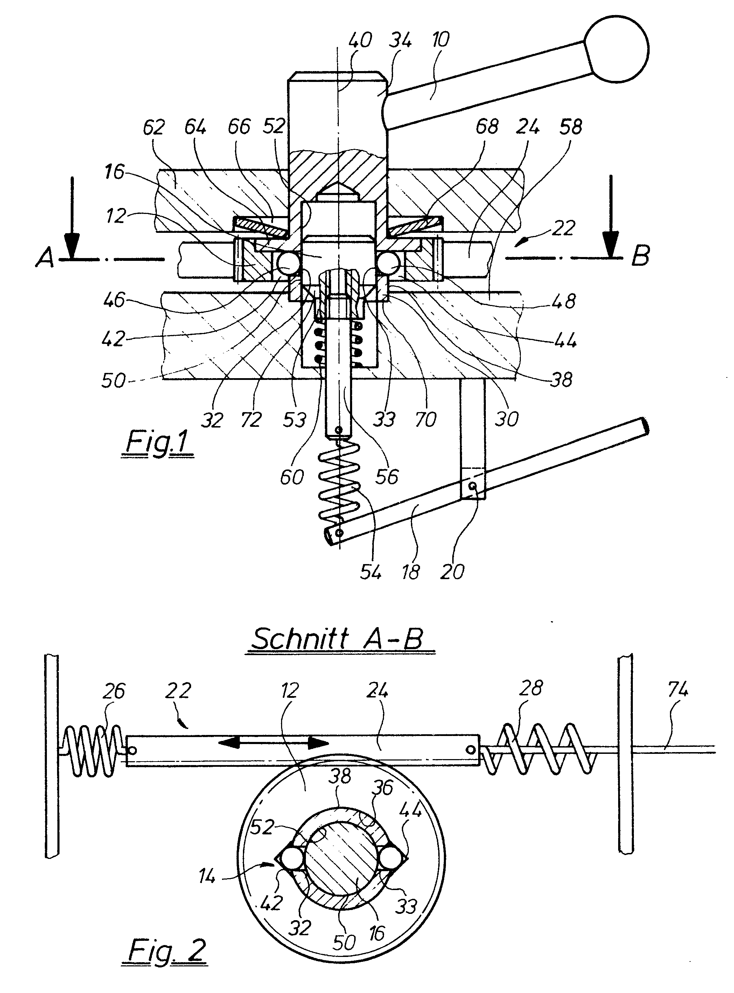

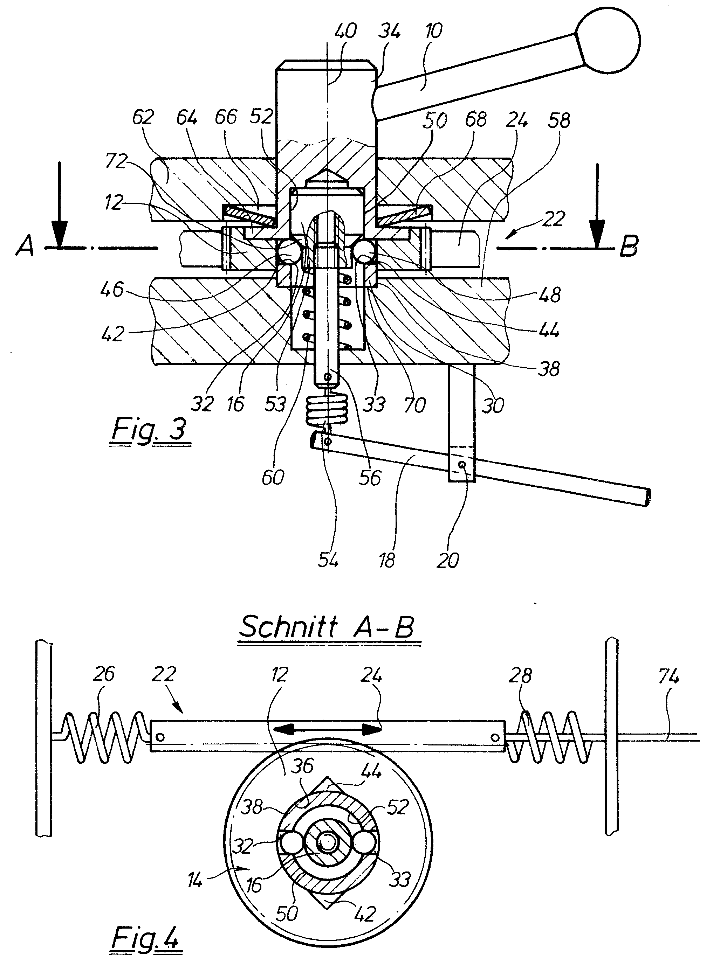

Die Kupplung weist einen Hohlzylinder 30 mit wenigstens einer Querbohrung, vorzugsweise zwei fluchtende Querbohrungen 32 und 33, als erste Kupplungshälfte auf. Der Hohlzylinder 30 bildet einen Teil einer Nabe 34, an welcher der Stellteil 10 sitzt. Die zweite Kupplungshälfte, die hier von dem Übertragungsglied 12, d. h. dem Zahnrad gebildet ist, ist mit einer zylindrischen Lagerfläche 36, die an eine dazu komplementär zylindrische Fläche 38 des Hohlzylinders 30 angrenzt, gegenüber diesem um eine gemeinsame Zylinderachse 40 drehbeweglich gelagert. Das Übertragungsglied 12 weist auf der zylindrischen Lagerfläche 36 wenigstens eine Vertiefung auf. In dem dargestellten, bevorzugten Ausführungsbeispiel sind zwei um 180° gegeneinander winkelversetzte Vertiefungen 42 und 44 vorgesehen. Die Vertiefungen 42 und 44 haben, wie aus Fig. 1 und 2 ersichtlich ist, v-förmigen Querschnitt. In jeder Querbohrung 32 und 33 ist ein Wälzkörper 46 bzw. 48 radial beweglich gelagert. Bei der bevorzugten Ausführungsform sind die Wälzkörper 46, 48 Kugeln. Es können aber auch zylindrische Rollen benutzt werden. Das Kupplungsschaltglied 16 weist eine zylindrische Fläche 50 auf, welche an die der zweiten Kupplungshälfte, d. h. dem Übertragungsglied 12, abgewandte zylindrische Fläche 52 des Hohlzylinders 30 angrenzt und so axial beweglich ist, daß der Wälzkörper 46 bzw. 48 in einer ersten Stellung des Kupplungsschaltglieds 16 (Fig. 1 und 2) durch dieses in der Vertiefung 42 bzw. 44 eingerastet gehalten wird und in der zweiten Stellung (Fig. 3 und 4) aus dieser Vertiefung 42 bzw. 44 ausweichen kann.

Bei der dargestellten bevorzugten Ausführungsform ist, wie gesagt, der Hohlzylinder 30 mit dem stufenlos verstellbaren Stellteil 10 verbunden und mit diesem um die Zylinderachse 40 verdrehbar. Die zweite Kupplungshälfte ist als Übertragungsglied 12 in Form eines Zahnrads drehbeweglich auf der Außenfläche 38 des Hohlzylinders 30 gelagert. Das Kupplungsschaltglied 16 ist ein in dem Hohlzylinder 30 axialbeweglich geführter massiver Zylinder. An den Zylinder des Kupplungsschaltglieds 16 schließt sich ein zylindrischer Ansatz 53 von vermindertem Durchmesser an, der in der zweiten Stellung des Kupplungsschaltglieds die Einwärtsbewegung des Wälzkörpers 46 bzw. 48 begrenzt.

Der schaltende Stellteil 18 ist mit dem Kupplungsschaltglied 16 über federnde Übertragungsmittel 54 in Form einer Schraubenfeder verbunden. Im einzelnen ist in das Kupplungsschaltglied 16 ein Stößel 56 eingeschraubt, der in einer unteren Platte 58 verschiebbar geführt ist. Das Ende des Stößels 56 ist über die Schraubenfeder 54 mit dem Stellteil 18, d. h. dem Griffbügel, verbunden. Das Kupplungsschaltglied 16 ist durch eine Druckfeder 60 in Richtung auf die zweite Stellung des Kupplungsschaltglieds vorbelastet. Der schaltende Stellteil greift über die als Zugfeder wirkende Schraubenfeder 54 an dem Kupplungsschaltglied an. Über diese Schraubenfeder 54 ist das Kupplungsschaltglied 16 unter Überwindung der Kraft der Druckfeder 60 in die erste Stellung umschaltbar, wenn der Stellteil 18 entgegen dem Uhrzeigersinn in Fig. 1 und 2 verschwenkt wird.

Das Übertragungsglied ist, wie gesagt, ein Zahnrad, das mit einer Zahnleiste 24 in Eingriff ist. Die Zahnleiste ist durch die Feder 26 und 28 nachgiebig an eine Ruhelage gefesselt. Der stufenlos verstellbare Stellteil 10 ist durch Reibschluß in seiner jeweiligen Stellung gehalten. Zu diesem Zweck weist die Nabe 34, die in einer oberen Platte 62 gelagert ist, einen Flansch 64 auf. In einer um die Nabe 34 herum gebildeten flachen Vertiefung 66 sitzt eine Tellerfeder 68, die sich an der Platte 62 abstützt und reibend an dem Flansch 64 anliegt. Die Nabe 34 ist mit ihrem unteren, den Hohlzylinder 30 bildenden Ende in einer flachen Vertiefung 70 der unteren Platte 58 abgestützt. Der Innenraum des Hohlzylinders 30 ist daher nach außen abgeschlossen.

Die beschriebene Anordnung arbeitet wie folgt:

Wenn der Maschinenführer an dem (nicht dargestellten) Führungshandgriff anfaßt und dabei den Griffbügel mitergreift und nach oben zieht, wird der den Griffbügel bildende Stellteil 18 entgegen dem Uhrzeigersinn verschwenkt. Über die Schraubenfeder 54 wird das Kupplungsschaltglied 16 gegen die Wirkung der Druckfeder 60 in die in Fig. 1 dargestellte Lage gebracht. Dabei ist vorausgesetzt, daß der stufenlos verstellbare Stellteil 10 sich in der Nullstellung befindet. Dann fluchten die Vertiefungen 42 und 44 mit den Querbohrungen 32 bzw. 33, so daß das Kupplungsschaltglied 16 mit einer konischen Fläche 72 die Wälzkörper 46 und 48 radial nach außen in die v-förmigen Vertiefungen 42, 44 drückt. Dadurch wird der Hohlzylinder 30 und damit die Nabe 34 und der Stellteil 10 formschlüssig mit dem Übertragungsglied 12, d. h. dem Zahnrad, gekuppelt. Die Kupplung 14 ist eingerückt. Es kann jetzt durch Verschwenken des Stellteils 10 über das Übertragungsglied 12 und gegen die Wirkung der Rückstelleinrichtung 22 (in der dem Fachmann geläufigeren und daher nicht dargestellten Weise) z. B. die Schiefscheibe einer Hydraulikpumpe für einen hydraulischen Fahrantrieb einer Straßen- oder Vibrationswalze über das Zug- und Druckkabel 74 verstellt werden. Der Reibverschluß an der Tellerfeder 68 hält den Stellteil 10 in der eingestellten Lage gegen die Wirkung der Rückstelleinrichtung 22, auch wenn der Maschinenführer den stufenlos verstellbaren Stellteil 10 losläßt, solange er nur den schaltenden Stellteil 18 festhält. Der Maschinenführer kann dabei (im Gegensatz zu der FR-A-2 428 784) jederzeit den Stellteil 10 verstellen, ohne den Stellteil 18 loslassen zu müssen.

Läßt der Maschinenführer den schaltenden Stellteil 18 los, dann geht dieser in die in Sig. 3 dargestellte Stellung. Die Schraubenfeder 54 entspannt sich, und die Druckfeder 60 drückt das Kupplungsschaltglied 16 nach oben. Dadurch rückt die zylindrische Fläche 50 aus dem Bereich der Querbohrungen 32 und 33, so daß die Wälzkörper 46 und 48 nach innen ausweichen können. Sie tun dies unter dem Einfluß der Rückstelleinrichtung 22, die das Übertragungsglied 12 in die Nullstellung zu drehen sucht und damit ein Drehmoment auf dieses ausübt, und der Schrägfläche der v-förmigen Vertiefungen. Die Kupplung 14 wird dadurch ausgerückt.

Das Übertragungsglied 12 geht nun unter dem Einfluß der Rückstelleinrichtung 22 in die Nullstellung. Die Hydraulikpumpe wird auf Nullhub gestellt, und der Fahrantrieb wird dadurch unterbrochen. Der Stellteil 10 bleibt unter dem Einfluß der Tellerfeder 68 zunächst in seiner Stellung.

Wenn jetzt der Griffbügel wieder erfaßt wird und der schaltende Stellteil 18 wieder in seine in Fig. 1 dargestellte Lage gebracht wird, dann erfolgt noch keine Einschaltung des Fahrantriebs. Da nämlich die Vertiefungen 42 und 44 infolge der Verdrehung des Übertragungsglieds 12 nicht mehr mit den Querbohrungen 42, 44 fluchten, können die Wälzkörper 46, 48 durch die konische Fläche 72 nicht nach außen gedrückt werden. Sie verhindern damit die Abwärtsbewegung des Kupplungsschaltglieds 16 und ein Einrücken der Kupplung 14. Die Schraubenfeder 54 wird dabei weiter vorgespannt und gestattet dadurch die Bewegung des schaltenden Stellteils 18 bis in seine Endstellung. Der Maschinenführer muß jetzt den stufenlos verstellbaren Stellteil 10 in seine Nullstellung bringen und damit die Querbohrungen 32, 33 den Vertiefungen 42 bzw. 44 nachführen, bevor die Kupplung 14 in der beschriebenen Weise wieder eingerückt wird.

Es wird auf diese Weise sichergestellt, daß nach einer Sicherheitsauslösung der Fahrantrieb erst durch einen bewußten Stellvorgang wieder in Gang gesetzt wird und nicht schon durch ein u. U. unbewußtes Anfassen an dem Führungshandgriff, wenn z. B. ein gestürzter Maschinenführer versucht, sich an dem Führungshandgriff hochzuziehen.

Die Anwendbarkeit der vorliegenden Erfindung ist nicht auf das dargestellte Ausführungsbeispiel einer Sicherheitsvorrichtung bei handgeführten Baumaschinen beschränkt. Die Erfindung ist auch bei anderen handgeführten Fahrzeugen mit Eigenantrieb anwendbar, z. B. bei handgeführten Gabelstaplern o. dgl. Die Erfindung ist auch anwendbar bei Sicherheitsvorrichtungen, bei denen eine Sicherheitsauslösung erfolgt, wenn der Benutzer sich von einem Fahrersitz erhebt oder von einem Fahrersitz herunterfällt. Eine denkbare Anwendung wäre beispielsweise ein Rasenmäher mit Fahrersitz, bei dem ein Antrieb für die Messer nur einschaltbar ist, wenn der Benutzer auf dem Fahrersitz sitzt. Eine andere Anwendung ergibt sich bei Sicherheitsvorrichtungen an Maschinen wie z. B. Pressen, wenn sichergestellt werden soll, das nach einer Sicherheitsauslösung nach Loslassen eines Handgriffs o. dgl. die Maschine erst durch einen bewußten Schaltvorgang wieder in Gang gesetzt wird.

Die Stellvorrichtung kann auch konstruktiv unter Beibehaltung des Grundgedankens in verschiedener Weise abgewandelt werden.

Es kann das Übertragungsglied innerhalb des Hohlzylinders sitzen, wobei die Vertiefungen auf der zylindrischen Außenfläche des Übertragungsglieds vorgesehen sind. Das Kupplungsschaltglied wäre dann eine Hülse o. dgl. auf der Außenseite des Hohlzylinders. Der stufenlos verstellbare Stellteil kann beispielsweise auch ein Stellmotor sein.

**Patentansprüche**

1. Stellvorrichtung enthaltend

einen stufenlos verstellbaren Stellteil (10), ein Übertragungsglied (12) zur Übertragung einer Stellbewegung, das von dem stufenlos verstellbaren Stellteil (10) verstellbar ist, eine auf das Übertragungsglied (12) wirkende Rückstelleinrichtung (22), welche das Übertragungsglied (12) in eine vorgegebene Stellung zurückzustellen trachtet, wobei die Verstellung des Übertragungsglieds (12) aus dieser Stellung gegen die Wirkung der Rückstelleinrichtung (22) erfolgt, eine zwischen dem stufenlos verstellbaren Stellteil (10) und dem Übertragungsglied vorgesehene, durch Bewegung eines Kupplungsschaltglieds (16) ausrückbare und nur bei einer vorgegebenen relativen Lage zwischen Stellteil (10) und Übertragungsglied (12) wiedereinrückbare Kupplung (14) und einen schaltenden Stellteil (18), der mit dem Kupplungsschaltglied (16) zum Ein- und Ausrücken der Kupplung (14) gekoppelt ist,

dadurch gekennzeichnet, daß

(a) die Kupplung (14) einen Hohlzylinder (30) mit einer Querbohrung (32 bzw. 33) als erste Kupplungshälfte aufweist,

(b) die zweite Kupplungshälfte mit einer zylindrischen Lagerfläche (36), die an eine dazu komplementär zylindrische Fläche (38) des Hohlzylinders (30) angrenzt, gegenüber diesem um eine gemeinsame Zylinderachse (40) drehbeweglich gelagert ist und auf der Lagerfläche (36) eine Vertiefung (42 bzw. 44) aufweist,

(c) in der Querbohrung (32 bzw. 33) ein Wälzkörper (46 bzw. 48) radial beweglich gehalten ist und

(d) das Kupplungsschaltglied (16) eine zylindrische Fläche (50) aufweist, welche an die der zweiten Kupplungshälfte abgewandte zylindrische Fläche (52) des Hohlzylinders (30) angrenzt, und so axial beweglich ist, daß der Wälzkörper (46 bzw. 48) in einer ersten Stellung des Kuppungsschaltglieds (16) durch dieses in der Vertiefung (42 bzw. 44) eingerastet gehalten wird und in der zweiten Stellung aus dieser Vertiefung (42 bzw. 44) ausweichen kann.

2. Stellvorrichtung nach Anspruch 1, dadurch gekennzeichnet, daß

(a) der Hohlzylinder (30) mit dem stufenlos verstellbaren Stellteil (10) verbunden und mit diesem um die Zylinderachse (40) verdrehbar ist,

(b) die zweite Kupplungshälfte als Übertragungsglied (12) drehbeweglich auf der Außenfläche (38) des Hohlzylinders (30) gelagert ist und

(c) das Kupplungsschaltglied (16) ein in dem Hohlzylinder axialbeweglich geführter Zylinder ist.

3. Stellvorrichtung nach Anspruch 2, dadurch gekennzeichnet, daß sich an den Zylinder des Kupplungsschaltglieds (16) ein zylindrischer Ansatz (53) von vermindertem Durchmesser anschließt, der in der zweiten Stellung die Einwärtsbewegung des Wälzkörpers (46 bzw. 48) begrenzt.

4. Stellvorrichtung nach einem der Ansprüche 1 bis 3, dadurch gekennzeichnet, daß der schaltend betätigbare Stellteil (18) mit dem Kupplungsschaltglied (16) über federnde Übertragungsglied (54) verbunden ist.

5. Stellvorrichtung nach Anspruch 4, dadurch gekennzeichnet, daß

(a) das Kupplungsschaltglied (16) durch eine Druckfeder (60) in Richtung auf die zweite Stellung vorbelastet ist und

(b) der schaltend betätigbare Stellteil (18) über eine Zugfeder (54) an dem Kupplungsschaltglied (16) angreift, über die das Kupplungsschaltglied (16) unter Überwindung der Kraft der Druckfeder (60) in die erste Stellung umschaltbar ist.

6. Stellvorrichtung nach einem der Ansprüche 4 bis 5, dadurch gekennzeichnet, daß

(a) das Übertragungsglied (12) ein Zahnrad ist, das mit einer Zahnleiste (24) in Eingriff ist, und

(b) die Zahnleiste (24) nachgiebig an eine Ruhelage gefesselt ist.

7. Stellvorrichtung nach einem der Ansprüche 1 bis 6, dadurch gekennzeichnet, daß der stufenlos verstellbare Stellteil (10) durch Reibschluß in seiner jeweiligen Stellung gehalten ist.

## Claims

1. Actuating device comprising an infinitely variable actuating element (10),

a transmitting member (12) for transmitting an actuating movement, which member is adjustable by the infinitely variable actuating element (10),
a reset device (22) acting on the transmitting member (12) tending to return the transmitting member to a predetermined position, the transmitting member (12) being moved from this position against the action of the reset device (22),
a clutch (14) provided between the infinitely variable actuating portion (10) and the transmitting member, which clutch (14) is arranged to be disengaged by movement of a clutch actuating member (16) and to be reengaged only at a predetermined relative position between actuating element (10) and transmitting member (12), and
a stepwise operative actuating element (18), which is connected to the clutch actuating member (16) for engaging and disengaging the clutch (14),

characterized in that

(a) the clutch (14) has a hollow cylinder (30) having a transverse bore (32 and 33, respectively as first clutch half.

(b) the second clutch half with a cylindrical bearing surface (36) which engages a cylindrical surface (38) complementary thereto of the hollow cylinder (30) is rotatably mounted relative to this hollow cylinder (30) about a common cylinder axis (40), the second clutch half having a recess (42 and 44, respectively) in the bearing surface (36),

(d) a roll bode (46 and 48, respectively) is supported radially movably in the transverse bore (32 and 33, respectively), and

(d) the clutch actuating member (16) has a cylindrical surface (50), which engages the cylindrical surface (52) of the hollow cylinder (30) remote from the second clutch half and which is axially movable such that the roll body (46 and 48, respectively) is held locked in in the recess (42 and 44, respectively) by the clutch actuating member, (16) when it is in a first position, and can evade from this recess (42 and 44, respectively) when the clutch switching member (16) is in a second position.

2. Actuating device as set forth in claim 1, characterized in that

(a) the hollow cylinder (30) is connected to the infinitely variable actuating element (10) and rotatable therewith about the cylinder axis (40),

(b) the second clutch half as transmitting member (12) is rotatably mounted on the external surface (38) of the hollow cylinder (30), and

(c) the clutch switching member (16) is a cylinder guided axially movably in the hollow cylinder.

3. Actuating device as set forth in claim 2, characterized in that a cylindrical projection (53) having a reduced diameter is connected to the cylinder of the clutch actuating member (16), which, in its second position, limits the inward movement of the roll body (46 and 48, respectively).

4. Actuating device as set forth in anyone of the claims 1 to 3, characterized in that the stepwise operable acutating element (18) is connected to the clutch switching member (16) through resilient transmitting means (54).

5. Actuating device as set forth in claim 4, characterized in that

(a) the clutch actuating member (16) is biased in the direction to the second position by a compression spring (60), and

(b) the stepwise operable actuating element (18) engages the clutch actuating member (16) through a tension spring (54) arranged change over the clutch actuating member (16) into its first position, the force of the compression spring (60) being overcome.

6. Actuating device as set forth in anyone of the claims 4 to 5, characterized in that

(a) the transmitting member (12) is a gear wheel which is in engagement with a rack (24), and

(b) the rack (24), is resiliently restrained to a position of rest.

7. Actuating device as set forth in anyone of the claims 1 to 6, characterized in that the infinitely variable actuating element (10) is held in its respective position by frictional engagement.

## Revendications

1. Dispositif de commande contenant un élément de commande (10) réglable de manière continue,

un élément de transmission (12) pour transmettre un mouvement de commande, qui est ajustable par l'élément de commande (10) réglable de manière continue, un dispositif de remise (22) agissant sur l'élément de transmission (12), qui tend à remettre l'élément de transmission (12) à une position prédéterminée, le déplacement de l'élément de transmission (12) de cette position se faisant contre l'action du dispositif de remise (22), un embrayage (14) prévu entre l'élément de commande (10) réglable de manière continue et l'élément de transmission, lequel embrayage (14) peut être désengagé par mouvement d'un élément de commande de l'embrayage (16) et réengagé seulement dans une position relative prédéterminée entre l'élément de commande (10) et l'élément de transmission (12), et un élément de commande (18) actionné en echelon qui est relié à l'élément de commande de l'embrayage (16) pour engager et désengager l'embrayage (14),

caractérisé par le fait

(a) que l'embrayage (14) comporte un cylindre creux (30) avec un alésage transversal (32 et 33, respectivement) en qualité de première partie d'embrayage,

(b) que la deuxième partie de l'embrayage, avec une surface de palier cylindrique (36) attenante à une surface (38) du cylindre creux (30) complémentairement cylindrique à celle-ci, est montée de manière rotative par rapport à ce cylindre creux (30) autour d'un axe de cylindre (40) commun, et présente un creux (42 et 44, respectivement) sur la surface de palier (36),

(c) qu'un organe de roulement (46 et 48 respectivement) est tenu dans l'alésage transversal 32 et 33, respectivement) de manière à permettre des mouvements radials, et

(d) que l'élément de commande de l'embrayage (16) présente une surface cylindrique (50) attenante à la surface cylindrique (52) du cylindre creux (30) opposée à la deuxième partie d'embrayage, et est mobile axialement de sorte que l'organe de roulement (46 et 48 respectivement) est tenu enclenché dans le creux (42 et 44 respectivement) à une première position de l'élément de commande de l'embrayage (16), et peut sortir de ce creux (42 et 44 respectivement) à une deuxième position.

2. Dispositif de commande selon la revendication 1, caractérisé par le fait que

(a) le cylindre creux (30) est relié à l'élément de commande (10) réglable de manière continue, et rotatif avec celui-ci autour de l'axe de cylindre (40),

(b) la deuxième partie de l'embrayage en qualité d'élément de transmission (12) est montée de manière rotative sur la surface extérieur (38) du cylindre creux, et

(c) l'élément de commande de l'embrayage (16) est un cylindre guidé dans le cylindre creux de manière à permettre des mouvements axiaux.

3. Dispositif de commande selon la revendication 1, caractérisé par le fait qu'une projection cylindrique (53) ayant un diamêtre réduit est relié au cylindre de l'élément de commande de l'embrayage (16), et qui limite le mouvement de l'organe de roulement (46 et 48 respectivement) vers l'intérieur à la deuxième position.

4. Dispositif de commande selon une quelconque des revendications 1 à 3, caractérisé par le fait que l'élément de commande (18) pouvant être actionné en echelon, est relié au membre de commande de l'embrayage (16) par l'intermédiaire de moyens élastiques de transmission (54).

5. Dispositif de commande selon la revendication 4, caractérisé par le fait que

(a) l'élément de commande de l'embrayage (16) est préchargé par un ressort de pression (60) vers la deuxième position, et

(b) l'élément de commande (18) pouvant être actionné en echelon engage l'élément de commande de l'embrayage (16) par l'intermédiaire d'un ressort de traction (54), par lequel l'élément de commande de l'embrayage (16) peut être renversé à la première position en surmontant la force du ressort de traction (60).

6. Dispositif de commande selon une quelconque des revendications 4 à 5, caractérisé par le fait que

(a) l'élément de transmission (12) est une roue d'engrenage qui s'engage dans une baguette d'engrenage (24), et

(b) la baguette d'engrenage (24) est fixé flexiblement à une position de repos.

7. Dispositif de commande selon une quelconque des revendications 1 à 6, caractérisé par le fait que l'élément de commande (10) réglable de manière continue est tenu dans chaque position par engagement à friction.

**Fig.1**

**Schnitt A-B**

**Fig. 2**

_Fig. 3_

_Schnitt A-B_

_Fig. 4_